# EUROPEAN PATENT APPLICATION

(11) **EP 4 657 594 A1**
(43) Date of publication of application: **03.12.2025**
(21) Application number: 24863271.3
(22) Date of filing: 06.09.2024
(51) Int. Cl.: H01M 10/058, H01M 10/44, H01M 10/052, H01M 4/04, H01M 4/38

(54) **PREPARATION METHOD FOR LITHIUM-SULFUR BATTERY**

(30) Priority: 08.09.2023 KR 20230119903
(71) Applicant: LG Energy Solution, Ltd., Seoul 07335 (KR)
(72) Inventor: HONG, Suk-Hyun, Daejeon 34122 (KR); KIM, Hyeon-Jin, Daejeon 34122 (KR); HAN, Sueng-Hoon, Daejeon 34122 (KR)
(74) Representative: Goddar, Heinz J.
(86) International application number: PCT/KR2024/013541
(87) International publication number: WO 2025/053692

(57) **Abstract**

The present disclosure relates to a method for manufacturing a lithium-sulfur battery, and more particularly, to an activation method of a lithium-sulfur battery through initial discharge. The present disclosure is characterized by activation of the lithium-sulfur battery through constant voltage (CV) discharge before initial charge. The method for manufacturing the lithium-sulfur battery according to an embodiment of the present disclosure may significantly reduce the initial discharge time in the activation process of the battery.

## Description

### TECHNICAL FIELD

The present disclosure relates to a method for manufacturing a lithium-sulfur battery, and more particularly, to a first cycle discharging method in an activation process of a lithium-sulfur battery.

The present application claims priority to Korean Patent Application No. 2023-0119903 filed on September 8, 2023 in the Republic of Korea, the disclosure of which is incorporated herein by reference.

### BACKGROUND ART

Recently, there has been growing attention to energy storage technology. As the range of applications is expanded to energy for mobile phones, camcorders, laptop computers, as well as electric vehicles, more research and development efforts are devoted to electrochemical devices such as secondary batteries. Electrochemical devices are attracting the most attention in this field, and development of rechargeable (secondary) batteries is the focus of attention. More recently, in the development of batteries, research and development is being conducted on new electrode and battery design to improve capacity density and specific energy.

Among secondary batteries, lithium-sulfur batteries are gaining attention as a high-energy-density secondary battery due to a lightweight lithium negative electrode and a sulfur positive electrode having high discharge capacity.

In a lithium-sulfur battery, sulfur in the form of S₈ of a ring structure is the starting material of reaction in the discharge process. During discharging, in the continuous reduction reaction, lithium polysulfide ((LiPS): Li₂Sₓ, 8≥x≥1) phase of a linear structure is formed, and moves from the positive electrode to the negative electrode in a dissolved state in an electrolyte, then reduced to polysulfide of monomers having a lower energy level. The negatively charged polysulfide dissolves in the liquid organic solvent and moves to the negative electrode due to the chemical potential and the concentration gradient between the positive electrode and the negative electrode. Finally, it is reduced to Li₂S (S₈ + 16Li → 8Li₂S) that is insoluble. In the charging process, it returns to the original material S₈ through the oxidation reaction in the reverse order. It is called as "shuttle" mechanism.

In lithium-sulfur batteries having the mechanism characteristics, before life cycling, an activation process is a key process that may suppress additional resistance variables while in operation for life evaluation by sufficient distribution of LiPS in the electrolyte at or near the positive electrode. In this process, lithium polysulfide (LiPS) shuttling affects the overall cell performance degradation and has a serious impact on the negative electrode degradation. In the discharging process, sulfur is reduced to lithium polysulfide, and dissolution of the intermediate product and diffusion causes problems. Lithium polysulfide causes capacity reduction on the surface of the lithium metal negative electrode due to the shuttle effect, and is partially reduced to lithium sulfide (Li₂S₂, Li₂S) that is non-conductive, which causes active material loss and hinders the movement of lithium ions, resulting in degradation of rate characteristics.

The side reaction leads to low Coulombic efficiency and instability of the negative electrode, which degrades the overall performance of the battery. Therefore, it is necessary to establish a new activation process for lithium-sulfur batteries and apply it to the manufacture of batteries.

In particular, in the activation process of lithium-sulfur batteries, the process time is too long when discharge is performed at a low rate (C-rate) for effective conversion of S₈ + 16Li → 8Li₂S during the initial discharging. Therefore, for mass production of lithium-sulfur batteries, it is necessary to establish a new activation process for significantly reducing the initial activation process time.

### DISCLOSURE

### Technical Problem

The present disclosure is directed to providing a method for manufacturing a lithium-sulfur battery for solving the above-described problem, and in particular, a method for manufacturing a lithium-sulfur battery including a novel battery activation process.

Through this, the present disclosure aims to provide a method for manufacturing a lithium-sulfur battery for significantly reducing the process time and maintaining high battery performance.

### Technical Solution

To solve the above-described problem,
according to an aspect of the present disclosure, there is provided a method for manufacturing a lithium-sulfur battery of the following embodiments.

The method for manufacturing the lithium-sulfur battery according to a first embodiment includes:
(S10) a process of manufacturing a preliminary battery including an electrode assembly and an electrolyte; and
(S20) an activation process of activating the preliminary battery,
wherein the electrode assembly includes a positive electrode, a negative electrode, and a separator interposed between the positive electrode and the negative electrode, wherein the positive electrode includes a positive electrode active material including sulfur (S).

The process of the (S20) includes the steps of:
(S21) constant voltage (CV) discharging, and
(S22) aging in a discharged state.

According to a second embodiment, in the first embodiment,
the step (S21) may be performed before initial charge of the preliminary battery.

According to a third embodiment, in the first or second embodiment,
the constant voltage discharging of the (S21) may be performed at a voltage selected from 1.0 V to 2.0 V.

According to a fourth embodiment, in any one of the first to third embodiments,
the constant voltage discharging of the (S21) may be performed at a voltage selected from 1.7 V to 1.9 V.

According to a fifth embodiment, in any one of the first to fourth embodiments,
the constant voltage discharging of the (S21) may be terminated at 0.001C to 0.1C on C-rate basis.

According to a sixth embodiment, in any one of the first to fifth embodiments,
the constant voltage discharging of the (S21) may be terminated at 0.010C to 0.10C on the C-rate basis.

According to a seventh embodiment, in any one of the first to sixth embodiments,
the constant voltage discharging of the (S21) may be performed in a range between 0.1C and 0.5C on C-rate basis.

According to an eighth embodiment, in any one of the first to seventh embodiments,
the aging step (S22) may be performed under an atmosphere of 20°C to 30°C.

According to a ninth embodiment, in any one of the first to eighth embodiments,
the method for manufacturing the lithium-sulfur battery may further include, after the aging step (S22), the step (S23) of constant current (CC) charging.

According to a tenth embodiment, in any one of the first to ninth embodiments,
the activation process of the (S20) may be performed in an environment in which the preliminary battery is under pressure.

According to an eleventh embodiment, in any one of the first to tenth embodiments,
the pressure may be equal to or higher than atmospheric pressure.

According to another aspect of the present disclosure, there is provided a lithium-sulfur battery of the following embodiments.

The lithium-sulfur battery according to a twelfth embodiment includes:
a positive electrode, a negative electrode, a separator interposed between the positive electrode and the negative electrode, and an electrolyte, wherein the positive electrode includes a positive electrode active material containing elemental sulfur (S),
wherein the lithium-sulfur battery is manufactured through an activation process, and in ten repeated charge and discharge cycles between 1.7 V and 2.5 V, an amount of lithium polysulfide eluted into the electrolyte after the tenth discharge ranges between 170 parts by weight and 500 parts by weight based on 100 parts by weight of lithium polysulfide eluted into the electrolyte after the first discharge.

According to a thirteenth embodiment, in the twelfth embodiment,
the amount of lithium polysulfide eluted into the electrolyte after the tenth discharge may range between 180 parts by weight and 400 parts by weight, based on 100 parts by weight of lithium polysulfide eluted into the electrolyte after the first discharge.

According to a fourteenth embodiment, in the twelfth or thirteenth embodiment,
the amount of lithium polysulfide eluted into the electrolyte after the tenth discharge may be 20 parts by weight or less based on 100 parts by weight of elemental sulfur (S) in the positive electrode active material before the first discharge.

According to a fifteenth embodiment, in any one of the twelfth to fourteenth embodiments,
the amount of lithium polysulfide eluted into the electrolyte after the first discharge may be 10 parts by weight or less based on 100 parts by weight of elemental sulfur (S) in the positive electrode active material before the first discharge.

According to a sixteenth embodiment, in any one of the twelfth to fifteenth embodiments,
the lithium-sulfur battery may be manufactured according to any one of the first to eleventh embodiments.

### Advantageous Effects

The method for manufacturing the lithium-sulfur battery according to an embodiment of the present disclosure may significantly reduce the initial discharge time in the activation process of the battery.

Furthermore, it may be possible to significantly reduce the time required for the manufacturing method and suppress initial degradation of the battery, thereby maintaining long life characteristics of the battery.

### BRIEF DESCRIPTION OF THE DRAWINGS

FIG. 1 shows the comparison of capacity retention characteristics over repeated charge and discharge of batteries according to Comparative Examples 1 and 2 and Examples 1 and 2.
FIG. 2 shows the comparison of energy density characteristics over repeated charge and discharge of batteries according to Comparative Examples 1 and 2 and Examples 1 and 2.
FIG. 3 shows the comparison of Coulombic efficiency characteristics over repeated charge and discharge of batteries according to Comparative Examples 1 and 2 and Examples 1 and 2.

### BEST MODE

Hereinafter, the present disclosure will be described in detail.

The term "(poly)sulfide" as used herein is the concept including "(poly)sulfide ion (Sₓ²⁻, 1≤x≤8)" and "lithium (poly)sulfide (Li₂Sₓ or Li₂Sₓ⁻, 1≤x ≤8)".

The term "polysulfide" used herein is the concept including "polysulfide ion (Sₓ²⁻, 1<x ≤8)" and "lithium polysulfide (Li₂Sₓ or Li₂Sₓ⁻, 1<x ≤8)".

### Method for manufacturing lithium-sulfur battery

According to an aspect of the present disclosure, there is provided a method for manufacturing a lithium-sulfur battery.

The present disclosure relates to a method for manufacturing a secondary battery, and more particularly, to a method for manufacturing a lithium-sulfur battery.

The method for manufacturing the lithium-sulfur battery according to an aspect of the present disclosure includes (S10) a process of manufacturing a preliminary battery including an electrode assembly and an electrolyte; and (S20) a process of activating the preliminary battery.

In an embodiment of the present disclosure, the method for manufacturing the lithium-sulfur battery may further include a degassing process of removing gas generated in the activation process.

In the present disclosure, the electrode assembly includes a positive electrode, a negative electrode, and a separator interposed between the positive electrode and the negative electrode, and the positive electrode includes a positive electrode active material including sulfur (S).

In an embodiment of the present disclosure, before the activation process S20, the electrode assembly is prepared such that it is filled with the electrolyte.

In addition, the 'lithium-sulfur battery' that is manufactured in the present disclosure is manufactured in such a way that the preliminary battery in a fully charged state is manufactured through the process S10, and the activation process S20 for activating the battery is characterized by including discharging before initial charging.

According to an aspect of the present disclosure, the activation process S20 is characterized in that initial discharging is performed under constant voltage (CV) conditions.

The activation process of a typical lithium-sulfur battery repeatedly performs charge and discharge to carry out a chemical reaction between sulfur, which is an active material, and lithium, and in particular, the first discharge is performed under constant current (CC) conditions. However, according to an aspect of the present disclosure, the activation process performs constant voltage (CV) discharge, thereby significantly reducing the number of charge and discharge repetitions. Accordingly, it may be possible to significantly reduce the time required for the activation of the lithium-sulfur battery compared to the conventional activation process. Through this, it may be possible to achieve mass production of the lithium-sulfur battery.

Furthermore, it is possible to maintain sufficiently superior effects in capacity, Columbic efficiency, and life characteristics over the conventional lithium-sulfur batteries activated through initial CC discharging.

Subsequently, each process of the method for manufacturing the lithium-sulfur battery according to the present disclosure will be described in detail.

### < S10 manufacture of preliminary battery>

First, the preliminary battery including the electrode assembly and the electrolyte is manufactured (S10).

In the specification, the preliminary battery refers to a battery in which a formation process has not been completed. In the present disclosure, the formation process may refer to a battery preparation process including activation and degassing after electrolyte solution injection.

The electrode assembly includes the negative electrode, the positive electrode, and the separator interposed between the negative electrode and the positive electrode. The negative electrode, the positive electrode, and the separator are described in detail below.

In the process S10, after the preliminary battery including the electrode assembly and the electrolyte is manufactured, before the activation process S20, the process S11 includes the step S11 of filling the electrode assembly with the electrolyte (for example, the electrolyte solution). When the electrode assembly is filled with the electrolyte, the electrode assembly may be activated by the following process. The electrolyte may include an organic solvent and a lithium salt. The organic solvent and the lithium salt will be described in detail below.

The 'filling' in the step S11 is performed to sufficiently wet the electrode assembly with the electrolyte (for example, the electrolyte solution) and enhance the activation of the electrode assembly by the charge and discharge. The electrolyte filling may be performed, for example, by accommodating the electrode assembly in a battery case, injecting the electrolyte into the battery case, and maintaining at a predetermined temperature for a predetermined time. For example, after the injection of the electrolyte solution, it may be maintained for 12 hours to 100 hours, and more preferably 24 hours to 75 hours to cause the electrolyte to permeate into the inside of the electrode assembly.

In an embodiment of the present disclosure, the wetting of the electrode assembly may be performed at 15°C to 30°C, and more specifically, at 20°C to 27°C, and within the aforementioned range, preferably, it may be possible to improve the wetting of the electrode assembly and prevent component changes of the electrolyte solution composition.

In an embodiment of the present disclosure, the electrode assembly may be manufactured by the commonly used method, and the electrode assembly is not limited to a particular type, and may include, for example, a roll type, a stack type, or a stack/folding type.

In an embodiment of the present disclosure, the roll-type electrode assembly may be manufactured by coating an electrode active material on a current collector, drying and pressing, tailoring into a band shape of a desired width and length, interposing the separator between the negative electrode and the positive electrode, and winding into a spiral shape.

In an embodiment of the present disclosure, the stack-type electrode assembly may be manufactured by stacking positive electrode and negative electrode unit cells in a sequential order. The stack-type electrode assembly may be easy to obtain a prismatic shape.

In an embodiment of the present disclosure, the stack/folding-type electrode assembly is an electrode assembly of an advanced structure in a hybrid form of the roll-type and the stack-type, and is an electrode assembly of a structure in which a full cell or bicell of a predetermined unit size is folded using a long continuous separation film. The electrode assembly of this structure has a combined structure of the folding-type and the stack-type and is referred to as 'stack/folding-type electrode assembly'.

In an embodiment of the present disclosure, the 'full cell' is a unit cell of a unit structure of positive electrode/separator/negative electrode, and each of the positive electrode and the negative electrode are located on each of two sides of the cell. The full cell may include the most basic structure, a positive electrode/separator/negative electrode cell and a positive electrode/separator/negative electrode/separator/positive electrode/separator/negative electrode cell. To make an electrochemical cell using the full cell, it is necessary to stack a plurality of full cells such that the positive electrode and the negative electrode face each other with the separator film interposed therebetween.

In an embodiment of the present disclosure, the 'bicell' is a unit cell in which the same electrode is located on two sides of the cell, such as a unit structure of positive electrode/separator/negative electrode/separator/positive electrode and a unit structure of negative electrode/separator/positive electrode/separator/negative electrode. To make an electrochemical cell using the bicell, it is necessary to stack a plurality of bicells such that the bicell of positive electrode/separator/negative electrode/separator/positive electrode structure (positive bicell) and the bicell of negative electrode/separator/positive electrode/separator/negative electrode structure (negative bicell) face each other with the separation film interposed therebetween. In some cases, a larger number of stacks of bicells may be contemplated.

In an embodiment of the present disclosure, the degassing process for removing gas generated in the battery (S12) may be performed before the activation process S20 after the electrolyte filling step S11.

### < S20 activation of preliminary battery>

The activation process is performed on the preliminary battery obtained above.

Meanwhile, the term 'activation' as used herein refers to a process of supplying a predetermined amount of electricity to the electrode assembly or battery cell having no electrical properties so that the positive and negative electrodes have electrical properties.

In an embodiment of the present disclosure, the activation process may cause reaction such as formation of a solid electrolyte interlayer (SEI), partial charging of battery capacity, and lithiation of the negative electrode when the carbon-based negative electrode active material is used, but the purpose of the activation process is not limited thereto.

Meanwhile, in the present disclosure, the preliminary battery is in uncharged and undischarged state before the activation process after it was filled with the electrolyte. More preferably, in the present disclosure, the activation process S20 includes initial discharging of the preliminary battery in the charge and discharge.

In the present disclosure, the activation process (S20) may be performed by discharging the preliminary battery prepared in the step S10 only one time. Alternatively, the activation process may include repeated charging and discharging after the initial discharging process, and in this instance, the activation process may preferably include discharging less than 6 times, for example, 5 times or less, 4 times or less, 3 times or less, 2 times or less, or one time.

In the present disclosure, the activation process S20 includes the following steps:
(S21) constant voltage (CV) discharging, and
(S22) aging in discharged state.

According to an aspect of the present disclosure, the activation process S20 includes the step S22 of aging in discharged state after the constant voltage discharging (S21).

In an embodiment of the present disclosure, the activation process S20 may include one or more discharging steps, and in this instance, the activation process S20 may include the aging step after one or more constant voltage discharging steps.

In another embodiment of the present disclosure, when the activation process S20 includes two or more discharging steps, the initial discharging is performed at constant voltage, and the activation process S20 essentially includes the aging step in discharged state after the initial constant voltage discharging.

In an embodiment of the present disclosure, the activation process S20 may reduce the time required for activating the battery through the initial discharging through the constant voltage discharging (S21).

In an embodiment of the present disclosure, the constant voltage discharging may be performed by discharging at constant voltage until a preset discharge current is reached. For example, the constant voltage discharging may be performed by discharging at constant voltage and the discharging may be terminated when the residual current reaches 0 mAh.

In another embodiment of the present disclosure, the constant voltage discharging may be performed by discharging at constant voltage until the C-rate reaches 0.001C to 0.1C. For example, the constant voltage discharging may be performed by discharging at constant voltage until the C-rate reaches 0.010C to 0.10C, specifically 0.030C to 0.070C, 0.05C to 0.10C, or 0.040C to 0.060C, for example, 0.050C. The current rate (C-rate) generally refers to the charge/discharge current (A) relative to the rated capacity (Ah) of the battery, i.e., the amount of current that the battery can sustain for 1 hour. The unit of the rate is C, which is an abbreviation for capacity.

In an embodiment of the present disclosure, the constant voltage discharging step S21 may be, for example, performed at constant voltage selected from 1.0 V to 2.0 V. Specifically, the constant voltage discharging step S21 may be performed at constant voltage selected from 1.5 V to 2.0 V, from 1.6 V to 1.9 V, from 1.7 V to 1.9 V, and from 1.7 V to 1.8 V, and may be, for example, performed at the voltage of 1.8 V. When the constant voltage discharging is performed at lower voltage than the aforementioned range, decomposition of the lithium salt and/or additives in the electrolyte may accelerate the degradation of the battery, or when the constant voltage discharging is performed at higher voltage than the aforementioned range, the battery may have insufficient capacity due to inadequate discharging.

In an embodiment of the present disclosure, the constant voltage discharging step S21 may be, for example, performed in a range between 0.1C and 1.0C on the C-rate basis. Specifically, the constant voltage discharging step S21 may be performed at a rate of from 0.1C to 0.5C, or from 0.1C to 0.3C. For example, the constant voltage discharging step S21 may be performed at a rate of 0.1C or 0.3C. When the constant voltage discharging is performed at a lower rate than the aforementioned rate, there may be a problem with inefficiency in the expected process time reduction through the constant voltage discharging, and when the constant voltage discharging is performed at a higher rate than the aforementioned rate, unstable discharging may result in lower capacity of the battery or faster degradation of the battery.

Subsequently, after the constant voltage discharging S21 is terminated, the method includes the step of resting the discharged preliminary battery in discharged state (S22). It is referred to as aging.

In an embodiment of the present disclosure, the step S22 of aging in discharged state is performed to achieve stability of SEI generated by discharge, stabilization of lithium polysulfide produced, and stabilization of the electrolyte.

In an embodiment of the present disclosure, the aging step S22 may be preferably performed under a room temperature atmosphere at the voltage and current at which the constant voltage discharging S21 is terminated.

In an embodiment of the present disclosure, the aging step S22 may be, for example, performed in the atmosphere of from 20°C to 30°C, and specifically, the room temperature atmosphere of from 23°C to 25°C, for example, 25°C.

In an embodiment of the present disclosure, the aging step S22 may be, for example, preferably performed within 12 hours or more and 48 hours or less, specifically 20 hours or more and 36 hours or less, and more specifically 20 hours or more and 24 hours or less. When the aging step S22 is performed in the aforementioned time range, it may have a beneficial effect on stabilization of the battery and process time reduction to achieve through the aging step.

When the activation process of the battery is initiated by discharging and the discharging is performed by the CV-aging method, it may be possible to reduce the activation process time of the battery, and increase the battery capacity by the activation of LiPS that remains inactive due to incomplete phase change caused by overvoltage. In addition, it is possible to ensure life characteristics at a similar level to batteries manufactured by the activation process including constant current discharging performed first.

In an embodiment of the present disclosure, the activation process S20 may be performed in the pressure environment applied to the preliminary battery.

In an embodiment of the present disclosure, a pressure equal to or higher than atmospheric pressure is preferably applied. The term 'atmospheric pressure' refers to pressure in the absence of pressurization or depressurization equipment. For example, it may be a normal atmospheric condition of about 1 atm. It may be applied to perform a safe process, and specifically, it may be performed by tightly holding the wetted electrode assembly between two press jigs or plates and applying pressure to the wetted electrode assembly, but the method is not limited thereto.

In an embodiment of the present disclosure, the pressure range may, for example, range from 1 atm to 15 atm, and more specifically from 4 atm to 10 atm. Within the aforementioned pressure range, preferably, it may be possible to prevent volume expansion of the negative electrode and deformation of the negative electrode, thereby achieving stable and uniform intercalation of lithium into the negative electrode.

In an embodiment of the present disclosure, each of the constant voltage discharging step S21 and the aging step S22 may be performed one or more times, and after the aging step S22, the method may further include the step S23 of constant current (CC) charging.

In an embodiment of the present disclosure, the constant current charging may be performed by charging the electrode assembly to the state of charge (SOC) of the battery of 40% or more. For example, in order to prevent degradation of the negative electrode due to passivation of the negative electrode during charging and/or deformation of the negative electrode due to expansion of the negative electrode, and to prevent overvoltage of the negative electrode caused by excessive charging, its consequential potential drop of the negative electrode, and reduction and precipitation of lithium, the charging may be performed by charging the electrode assembly to the SOC of the electrode assembly of from 60% to 90%, and more preferably from 70% to 85%. However, it does not mean that the charging to the SOC 100% of the electrode assembly is excluded.

In an embodiment of the present disclosure, the constant current charging may be performed until an end-of-voltage is reached through a constant current.

In an embodiment of the present disclosure, the constant current charging may be, for example, performed until a voltage of from 2.4 V to 2.7 V, and specifically, from 2.5 V to 2.6 V is reached, and may be, for example, performed until 2.5 V.

In an embodiment of the present disclosure, the constant current charging may be, for example, performed at a rate of from 0.1 C to 0.5 C, specifically, from 0.1 C to 0.3 C, or 0.1 C to 0.2 C on the C-rate basis. More specifically, it may be performed at 0.1 C.

### <S30 Degassing>

In an embodiment of the present disclosure, after the activation process S20, the degassing process S30 may be performed to remove remaining gas in the battery.

Gas may be generated as a by-product of the SEI layer formation or the irreversible capacity after the activation of the battery. Accordingly, the process of removing the by-product may be performed for use of the activated secondary battery, and the secondary battery may be manufactured in a usable form through the gas removal process. The step of removing gas may be performed by any method commonly used in the field of secondary batteries without limitation.

In an embodiment of the present disclosure, the step of removing the gas may be performed, for example, by partially opening the case in which the electrode assembly is housed, removing the gas, and sealing the case.

Hereinafter, the configuration of the lithium-sulfur battery will be described in detail.

In an embodiment of the present disclosure, the lithium-sulfur battery may be manufactured by loading the electrode assembly into the battery case together with the electrolyte and sealing the case.

In an embodiment of the present disclosure, the case may be made of a metal, and may come in different shapes according to the type of the battery, for example, a cylindrical case, a stack-type case, a coin-type case, or a prismatic case, and the present disclosure is not limited to a particular shape.

### <Electrode assembly>

First, the electrode assembly includes the negative electrode, the positive electrode, and the separator interposed between the negative electrode and the positive electrode.

### <Positive electrode>

The positive electrode according to the present disclosure is not limited to a particular one and may include any positive electrode that may be used in the lithium-sulfur battery. For example, the positive electrode may include a current collector and a positive electrode active material layer on at least one surface of the current collector.

In an embodiment of the present disclosure, the positive electrode is used in the lithium-sulfur battery and includes a compound including elemental sulfur (S) as an active material. In an embodiment of the present disclosure, the elemental sulfur may be derived from at least one selected from the group consisting of inorganic sulfur (S₈), Li₂Sₙ (n≥1), disulfide compounds such as 2,5-dimercapto-1,3,4-thiadiazole, or 1,3,5-trithiocyanuic acid, organosulfur compounds, and carbon-sulfur polymer ((C₂Sₓ)ₙ, x=2.5 to 50, n≥2). In an embodiment of the present disclosure, the positive electrode may include inorganic sulfur (S₈) as the positive electrode active material.

In an embodiment of the present disclosure, the sulfur may be used in combination with a carbon material because sulfur alone does not have electrical conductivity. Accordingly, the positive electrode may include a sulfur-carbon composite as the positive electrode active material. Specifically, the positive electrode active material may include the sulfur-carbon composite in an amount of 80 wt% or more, and preferably 90 wt% or more, based on 100 wt% of the positive electrode active material, and more preferably, the positive electrode active material may consist of the sulfur-carbon composite. In addition, the sulfur (S) content may be 70 wt% or more based on 100 wt% of the sulfur-carbon composite, but the present disclosure is not limited thereto.

The term "composite" as used herein refers to a combination of two or more materials with physically and chemically different phases and more effective functions.

In an embodiment of the present disclosure, the sulfur-carbon composite may be a composite produced by simple mixing the sulfur with the carbon material, or coating with a core-shell structure or loading. The coating of the core-shell structure may be a coating of any one of the sulfur and the carbon material with the other, and for example, a surface covering of the carbon material with the sulfur, or vice versa. The carbon material may have a porous structure having pores in the body and on the body surface, and in particular, the pores in the body may be filled with the sulfur. In the present disclosure, the sulfur-carbon composite is not limited to a particular one and may include any sulfur-carbon composite satisfying a ratio of amounts of the sulfur-based compound and the carbon material as described below. Meanwhile, in the present disclosure, the sulfur content is preferably 70 wt% or more based on the total weight of the positive electrode active material.

The carbon material has the porous structure including irregular pores on the surface and inside, and acts as a host to provide the framework for uniform and stable immobilization of the sulfur, and increase the low electrical conductivity of the sulfur to enhance the electrochemical reaction. In particular, in the sulfur-carbon composite, when the carbon material acting as the sulfur host has a large BET surface area and a proper particle size (D₅₀), it may result in high sulfur loading, low irreversible capacity, high energy density, and high sulfur utilization in the electrochemical reaction.

In the sulfur-carbon composite of the present disclosure, the carbon material used as the sulfur host may be generally produced by carbonizing precursors of various carbon materials.

The carbon material may include any carbon-based material having porosity and conductivity commonly used in the art. For example, the carbon material may include at least one selected from the group consisting of graphene; carbon black such as Denka black, acetylene black, Ketjen black, channel black, furnace black, lamp black, and thermal black; carbon nanotubes (CNT) such as single-walled carbon nanotubes (SWCNT), multi-walled carbon nanotubes (MWCNT); carbon fibers such as graphite nanofibers (GNF), carbon nanofibers (CNF), activated carbon fibers (ACF); graphite such as natural graphite, artificial graphite, and expandable graphite; carbon nanoribbons; carbon nanobelts, carbon nanorods, and activated carbon.

In the sulfur-carbon composite according to the present disclosure, the sulfur is located in at least one of the inside of the pores or the surface of the carbon material, and in this instance, the sulfur may be present in an area of less than 100% of the inside of the pores or the surface of the carbon material, preferably from 1% to 95%, and more preferably from 60% to 90%.

In an embodiment of the present disclosure, in addition to the active material and the carbon material, the positive electrode active material layer may further include a binder material to bind them together and enable the adhesion to the current collector.

In an embodiment of the present disclosure, the binder material may play a role in improving the bond between positive electrode active material particles and the adhesion strength between the positive electrode active material and the positive current collector, and specific examples of the binder material may include polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinyl pyrrolidone, polytetrafluoroethylene, polyethylene, polypropylene, ethylene-propylene-diene monomer rubber (EPDM rubber), sulfonated-EPDM, styrene butadiene rubber (SBR), fluororubber, polyacrylamide (PAA), or copolymers thereof, and these exemplary binder materials may be used singly or in combination.

### <Negative electrode>

In a specific embodiment of the present disclosure, the negative electrode may include a current collector and a negative electrode active material layer on the surface of the current collector. According to a specific embodiment of the present disclosure, the negative electrode active material layer includes a negative electrode active material, and may further include a binder and a conductive material when necessary.

In an embodiment of the present disclosure, the negative electrode active material may include one selected from the group consisting of lithium metal; metal composite oxide such as LiₓFe₂O₃ (0≤x≤1), LiₓWO₂ (0≤x≤1), SnₓMe₁₋ₓMe'_{y}O_{z} (Me: Mn, Fe, Pb, Ge; Me': Al, B, P, Si, elements of Groups 1, 2, and 3 of the periodic table, halogen; 0<x≤1; 1≤y≤3; 1≤z≤8); a lithium alloy of lithium and other metal; a silicon-based alloy; a tin-based alloy; metal oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅; conductive polymer such as polyacetylene; Li-Co-Ni based materials; titanium oxide; lithium titanium oxide; and carbon-based materials, or a mixture of two or more of them. In the lithium alloy, the other metal may include at least one selected from Al, Si, Sn, Pb, Zn, Bi, In, Mg, Ga, and Cd. Meanwhile, the carbon-based material may be at least one selected from the group consisting of crystalline artificial graphite, crystalline natural graphite, amorphous hard carbon, low-crystalline soft carbon, carbon black, acetylene black, graphene, and fibrous carbon. Preferably, in the present disclosure, the negative electrode active material may include a lithium metal or a lithium alloy.

In an embodiment of the present disclosure, the negative electrode active material may include a lithium metal or an alloy of lithium and other metal, and in this instance, the negative electrode active material layer may be prepared in the form of a thin film including the metal and may be laminated with the current collector to form the negative electrode. The lamination may be performed by applying pressure, and the current collector and the thin film may be heated to higher temperature than room temperature while applying pressure. In addition, the lamination may be performed by a roll pressing method.

The conductive material may be used to impart conductivity to the negative electrode, and is not limited to a particular type and may include any material that allows electrons to move without a chemical change to the battery. Specific examples of the conductive material may include one of graphite such as natural graphite or artificial graphite; carbon-based materials such as carbon black, acetylene black, Ketjen black, channel black, furnace black, lamp black, thermal black, carbon fibers, and carbon nanotube; metal powders or metal fibers such as copper, nickel, aluminum, and silver; conductive whiskers such as zinc oxide or potassium titanate; conductive metal oxide such as titanium oxide; or conductive polymer such as polyphenylene derivatives, or a mixture of two or more of them.

### <Separator>

In an embodiment of the present disclosure, the separator may be interposed between the positive electrode and the negative electrode in the electrode assembly. The separator may separate the negative electrode and the positive electrode and provide a passage of movement of lithium ions. The separator may include any separator commonly used in the lithium secondary battery without limitation.

In an embodiment of the present disclosure, the separator may include any porous polymer film, for example, those made of polyolefin polymer such as an ethylene homopolymer, a propylene homopolymer, an ethylene/butene copolymer, an ethylene/hexene copolymer, and an ethylene/methacrylate copolymer, or a laminated structure of two or more layers thereof. In addition, the separator may include any commonly used porous nonwoven fabric, for example, nonwoven fabrics made of high-melting-point glass fibers or polyethylene terephthalate fibers. In addition, the separator may include a coated separator having a coating layer including a ceramic or polymer material to ensure heat resistance or mechanical strength.

In an embodiment of the present disclosure, the separator may include a solid electrolyte membrane, but is not limited thereto.

In an embodiment of the present disclosure, the separator may be included in the form of a solid electrolyte membrane attached to the surface of at least one of the positive electrode or the negative electrode, but the present disclosure is not limited thereto.

### <Electrolyte>

In an embodiment of the present disclosure, the electrolyte includes the lithium salt to supply lithium ions in the battery.

In an embodiment of the present disclosure, in addition to the lithium salt, the electrolyte may further include a non-aqueous solvent, but the present disclosure is not limited thereto.

In an embodiment of the present disclosure, the non-aqueous solvent acts as a medium of movement of the ions involved in the electrochemical reaction of the battery. The non-aqueous solvent may include any non-aqueous solvent commonly used in the lithium-sulfur battery without limitation, and for example, may include ether, ester, amide, chain carbonate, cyclic carbonate, used singly or in combination. Among them, a representative example may include ether-based compounds.

The ether-based compound may include an acyclic ether and a cyclic ether. For example, the acyclic ether may include at least one selected from the group consisting of dimethyl ether, diethyl ether, dipropyl ether, methyl ethyl ether, methyl propyl ether, ethyl propyl ether, dimethoxyethane, diethoxyethane, ethylene glycol ethyl methyl ether, diethylene glycol dimethyl ether, diethylene glycol diethyl ether, diethylene glycol methyl ethyl ether, triethylene glycol dimethyl ether, triethylene glycol diethyl ether, triethylene glycol methyl ethyl ether, tetraethylene glycol dimethyl ether, tetraethylene glycol diethyl ether, tetraethylene glycol methyl ethyl ether, polyethylene glycol dimethyl ether, polyethylene glycol diethyl ether, and polyethylene glycol methyl ethyl ether. For example, the cyclic ether may include at least one selected from the group consisting of 1,3-dioxolane, 4,5-dimethyl-dioxolane, 4,5-diethyl-dioxolane, 4-methyl-1,3-dioxolane, 4-ethyl-1,3-dioxolane, tetrahydrofuran, 2-methyltetrahydrofuran, 2,5-dimethyltetrahydrofuran, 2,5-dimethoxytetrahydrofuran, 2-ethoxytetrahydrofuran, 2-methyl-1,3-dioxolane, 2-vinyl-1,3-dioxolane, 2,2-dimethyl-1,3-dioxolane, 2-methoxy-1,3-dioxolane, 2-ethyl-2-methyl-1,3-dioxolane, tetrahydropyran, 1,4-dioxane, 1,2-dimethoxy benzene, 1,3-dimethoxy benzene, 1,4-dimethoxy benzene, and isosorbid dimethyl ether, furan, 2-methyl furan, 3-methyl furan, 2-ethyl furan, 2-butyl furan, 2,3-dimethylfuran, 2,4-dimethylfuran, 2,5-dimethyl furan, pyran, 2-methylpyran, 3-methylpyran, 4-methylpyran, benzoburan, 2-(2-nitrovinyl)furan, thiophene, 2-methylthiophene, 2-ethylthiophene, 2-propylthiophene, 2-butylthiophene, 2,3-dimethylthiophene, 2,4-dimethylthiophene, and 2,5-dimethylthiophene, but is not limited thereto.

### Lithium salt

The lithium salt is a compound capable of providing lithium ions in the electrolyte. The lithium salt may include LiPF₆, LiClO₄, LiAsF₆, LiBF₄, LiSbF₆, LiAlO₄, LiAlCl₄, LiCF₃CO₂, LiCF₃SO₃, LiC₄F₉SO₃, LiN(C₂F₅SO₃)₂, LiCH₃SO₃, LiN(C₂F₅SO₂)₂, LiN(CF₃SO₂)₂, LiC₄BO₈, LiCl, LiBr, LiB₁₀Cl₁₀, LiI or LiB(C₂O₄)₂.

In the present disclosure, to enhance sulfur utilization and achieve the high-capacity and high-voltage battery, the lithium salt may preferably include Li-TFSI. More preferably, the lithium salt may include LiN(CF₃SO₂)₂ (Li-TFSI) in an amount of 80 wt% or more, or 90 wt% or more, or 100% based on the total 100 wt% of the lithium salt, but the present disclosure is not limited thereto.

In an embodiment of the present disclosure, the concentration of the lithium salt may, for example, range from 0.1 M to 2.0 M, preferably from 0.5 M to 1 M, and more preferably from 0.5 M to 0.75 M. When the concentration of the lithium salt is included in the aforementioned range, the electrolyte may have appropriate conductivity and viscosity, leading to good electrolyte performance, and effective movement of lithium ions, but the present disclosure is not limited thereto.

### Additive

In addition to the above-described components, the electrolyte may further include an additive to improve the life characteristics of the battery, suppress the capacity decline of the battery, and improve the discharge capacity of the battery. For example, the additive may include nitric acid compounds, nitrous acid compounds, haloalkylene carbonate compounds such as difluoroethylene carbonate, pyridine, triethylphosphite, triethanolamine, cyclic ether, ethylene diamine, n-glyme, hexamethylphosphoric triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxyethanol, or aluminum trichloride, used singly or in combination.

In a specific embodiment of the present disclosure, the electrolyte may include a nitric acid compound and/or a nitrous acid compound as the additive. The nitric acid compound/nitrous acid compound may form a stable film on the negative electrode or the lithium metal electrode, and improve charge/discharge efficiency. Examples of the nitric acid or nitrous acid compound include at least one selected from the group consisting of inorganic nitric acid or nitrous acid compounds such as lithium nitrate (LiNO₃), potassium nitrate (KNO₃), cesium nitrate (CsNO₃), barium nitrate (Ba(NO₃)₂), ammonium nitrate (NH₄NO₃), lithium nitrite (LiNO₂), potassium nitrite (KNO₂), cesium nitrite (CsNO₂), ammonium nitrite (NH₄NO₂); organic nitric acid or nitrous acid compounds such as methyl nitrate, dialkyl imidazolium nitrate, guanidine nitrate, imidazolium nitrate, pyridinium nitrate, ethyl nitrite, propyl nitrite, butyl nitrite, pentyl nitrite, octyl nitrite; organic nitro compounds such as nitromethane, nitropropane, nitrobutane, nitrobenzene, dinitrobenzene, nitropyridine, dinitropyridine, nitrotoluene, dinitrotoluene; and a combination thereof, but is not limited thereto. In an exemplary embodiment of the present disclosure, the additive may include lithium nitrate.

### Lithium-sulfur battery

According to another aspect of the present disclosure, there is provided a lithium-sulfur battery manufactured by the method for manufacturing the lithium-sulfur battery.

In particular, there is provided the lithium-sulfur battery activated by the above-described activation process.

According to an aspect of the present disclosure, the lithium-sulfur battery manufactured by the above-described method includes the positive electrode, the negative electrode, the separator interposed between the positive electrode and the negative electrode, and the electrolyte, wherein the positive electrode includes the positive electrode active material containing elemental sulfur (S), and the lithium-sulfur battery is manufactured through the activation process.

The lithium-sulfur battery is configured such that in ten repeated charge and discharge cycles between 1.7 V and 2.5 V, the amount of lithium polysulfide eluted into the electrolyte after the tenth discharge ranges between 170 parts by weight and 500 parts by weight based on 100 parts by weight of lithium polysulfide eluted into the electrolyte after the first discharge.

In an embodiment of the present disclosure, the lithium-sulfur battery may be configured such that the amount of lithium polysulfide eluted into the electrolyte after the tenth discharge ranges between 180 parts by weight and 400 parts by weight based on 100 parts by weight of lithium polysulfide eluted into the electrolyte after the first discharge.

In an embodiment of the present disclosure, in the lithium-sulfur battery, the amount of lithium polysulfide eluted into the electrolyte after the tenth discharge may range between 170 parts by weight and 500 parts by weight, between 180 parts by weight and 400 parts by weight, between 200 parts by weight and 380 parts by weight, between 250 parts by weight and 380 parts by weight, between 300 parts by weight and 380 parts by weight, or between 350 parts by weight and 370 parts by weight, based on 100 parts by weight of lithium polysulfide eluted into the electrolyte after the first discharge. When the ratio of the amount of lithium polysulfide eluted after the first discharge to the amount of lithium polysulfide eluted after the tenth discharge lies in the aforementioned range, it may have a beneficial effect on long life characteristics of the lithium-sulfur battery, but the present disclosure is not limited thereto.

In general, the lithium-sulfur battery loses capacity over repeated charge and discharge due to loss of the positive electrode active material by the shuttle effect. For example, with repeated charge and discharge cycles of the lithium-sulfur battery, the positive electrode active material is converted between inorganic sulfur (S₈) and lithium polysulfide (Li₂Sₓ, 1<x≤8), and in this instance, the lithium polysulfide is eluted into the electrolyte.

The lithium-sulfur battery activated according to an aspect of the present disclosure may have longer life by reducing the amount of lithium polysulfide eluted from the positive electrode into the electrolyte.

In the specification, the amount of lithium polysulfide eluted into the electrolyte may be measured by extracting lithium polysulfide from the electrolyte and measuring it.

In an embodiment of the present disclosure, the amount of lithium polysulfide eluted into the electrolyte may be analyzed by a method including the steps of disassembling the lithium-sulfur battery, extracting the electrolyte with an addition of an extraction solvent, removing the battery from the extract, performing methyl derivatization of lithium polysulfide (Li₂Sₓ, 1<x≤8) in the extract with an addition of a methyl group-containing compound, fractionating the methyl derivatives ((CH₃)₂Sx, 1<x≤8) of lithium polysulfide by liquid chromatography (LC)/ultraviolet spectrometry (UV)-assisted analysis, and calculating the amount of lithium polysulfide eluted into the electrolyte for each component by using a predetermined calibration curve and relative response factor. Here, the pre-determined calibration curve and relative response factor may be prepared by preparing the standard for each concentration for all or some components of the methyl derivatives of lithium polysulfide, fractionating by LC/UV-assisted analysis to create the calibration curve, and determining the relative response factor for each component by using the slope of the calibration curve.

In an embodiment of the present disclosure, the amount of lithium polysulfide eluted into the electrolyte may be measured by the method disclosed in Korean Patent Publication No. 2023-0099320 (published on July 4, 2023), but is not limited thereto.

In an embodiment of the present disclosure, the amount of lithium polysulfide eluted into the electrolyte after the tenth discharge may be, for example, 20 parts by weight or less based on 100 parts by weight of elemental sulfur (S) in the positive electrode active material before the first discharge. Specifically, it may range between 0.1 parts by weight and 20 parts by weight, between 0.1 parts by weight and 15 parts by weight, between 1 part by weight and 15 parts by weight, between 5 parts by weight and 15 parts by weight, between 10 parts by weight and 15 parts by weight, or between 11 parts by weight and 13 parts by weight.

In an embodiment of the present disclosure, the amount of lithium polysulfide eluted into the electrolyte after the first discharge may be, for example, 10 parts by weight or less based on 100 parts by weight of elemental sulfur (S) in the positive electrode active material before the first discharge. Specifically, it may be 5 parts by weight or less. Specifically, it may range between 0.1 parts by weight and 10 parts by weight, between 0.1 parts by weight and 5 parts by weight, between 1 part by weight and 5 parts by weight, between 5 parts by weight and 10 parts by weight, or between 3 parts by weight and 7 parts by weight.

In the specification, the sulfur (S) content in the positive electrode active material before the first discharge may be measured by disassembling the charged battery to separate the positive electrode, obtaining the sulfur-carbon composite from the positive electrode, and measuring the weight of elemental sulfur (S) through elemental analysis of the sulfur-carbon composite. For example, after removing the binder by applying high temperature heat to the positive electrode or using a binder extract, to obtain the sulfur-carbon composite, the weight of elemental sulfur (S) may be measured through a thermogravimetric analyzer (TGA).

In an embodiment of the present disclosure, the sulfur (S) content in the positive electrode active material before the first discharge may be measured by disassembling the charged battery to separate the positive electrode, measuring the amount of each component by elemental analyzer (EA), ion chromatography (IC), and inductively coupled plasma optical emission spectrometer (ICP-OES) on the positive electrode sample, and determining the total composition of the positive electrode sample and the amount of by-products. Specifically, the EA analysis may be used to identify the components containing C, S, N, H, and O, the IC analysis may be used to identify the components containing F, and the ICP-OES analysis may be used to identify the components containing Li and S. In this instance, S and C identified by the EA may be derived from the sulfur (S₈) and the carbon-based material used in the positive electrode, respectively, N, H, and O identified by the EA may be derived from the by-products generated from the electrolyte during charging and discharging, and F identified by the IC may be derived from the by-products generated from the lithium salt in the electrolyte during charging and discharging. In addition, Li identified by the ICP-OES may be derived from the by-products generated from the negative electrode active material intercalated at the negative electrode or the lithium salt in the electrolyte during charging and discharging, and S identified by the ICP-OES may be derived from the by-products of Li₂S or Li₂S₂ produced through the stepwise reduction of the sulfur (S₈) used in the positive electrode during charging and discharging.

In an embodiment of the present disclosure, the sulfur (S) content in the positive electrode active material before the first discharge may be measured by the method disclosed in Korean Patent Publication No. 2023-0085616 (published on June 14, 2023), but is not limited thereto.

Hereinafter, the present disclosure will be described in detail by way of examples.

### <(S10) Manufacture of preliminary battery>

Carbon nanotubes and sulfur were evenly mixed and placed in an oven at 155°C for 30 minutes to prepare a sulfur-carbon composite. The sulfur (S₈) content in 100 wt% of the sulfur-carbon composite was 75 wt% (S₈/CNT weight ratio 75:25). 90 wt% of the sulfur-carbon composite, 5 wt% of Denka black, and 5 wt% of a binder (styrene butadiene rubber/carboxymethyl cellulose, weight ratio 7:3) were mixed to prepare a positive electrode slurry. The solids concentration in the slurry was 25 wt%.

The slurry was applied to two sides of a 20 µm-thick aluminum current collector, dried at 50°C for 12 hours, and pressed using a roll press machine to manufacture a positive electrode. The loading amount of the positive electrode active material (electrode area basis) was 2.6 mAh/cm², and porosity was 75 vol%.

A 60 µm-thick lithium thin film was prepared as a negative electrode.

An electrolyte was a mixture of 1 M lithium bis(trifluoromethanesulfonyl)imide (LiTFSI) and 1 wt% lithium nitrate (LiNO₃) dissolved in an organic solvent of 1,3-dioxolane and dimethyl ether (DOL:DME = 1:1 (volume ratio)).

The as-prepared positive and negative electrodes were positioned with a polyethylene porous film as a separator having a thickness of 16 µm and a porosity of 68 vol%, and placed in a pouch, the as-prepared electrolyte was injected, and the pouch was sealed to manufacture a preliminary battery. In the battery, a total of 7 sheets of positive electrodes and a total of 8 sheets of negative electrodes were stacked and folded with the separator interposed therebetween.

### <(S20) Activation of preliminary battery>

### Example 1

The as-prepared preliminary battery underwent CV discharge in 1.8 V, 0.1 C constant voltage (CV) mode with the termination condition being 0.05 C. After the discharging was terminated, aging was performed at 25°C for 12 hours to 48 hours, followed by one charge cycle in 2.5 V, 0.1 C constant current (CC) mode.

### Example 2

The battery was activated by the same method as in Example 1, except that the as-prepared preliminary battery underwent CV discharge in a 1.8 V, 0.3 C constant voltage (CV) mode.

### Comparative Example 1

The as-prepared preliminary battery underwent CV discharge in 1.8 V, 0.1 C constant voltage (CV) mode with the termination condition being 0.05 C. After the discharging was terminated, one charge cycle was performed in 2.5 V, 0.1 C constant current (CC) mode without aging.

### Comparative Example 2

The as-prepared preliminary battery was discharged to 1.8 V at 0.1 C in a constant current (CC) mode, followed by CC charge and discharge at 0.1 C to 2.5 V three cycles.

### Life characteristics evaluation

In each Example and Comparative Example, life characteristics of the completed batteries after the activation process were evaluated.

For each battery, constant current discharging was performed at 0.1C to 1.8 V, and charging and discharging was repeated until capacity reaches 80% based on 100% discharge capacity in the first cycle.

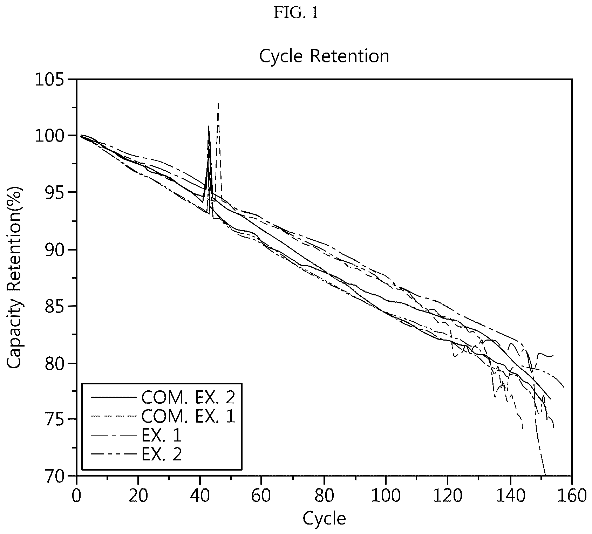

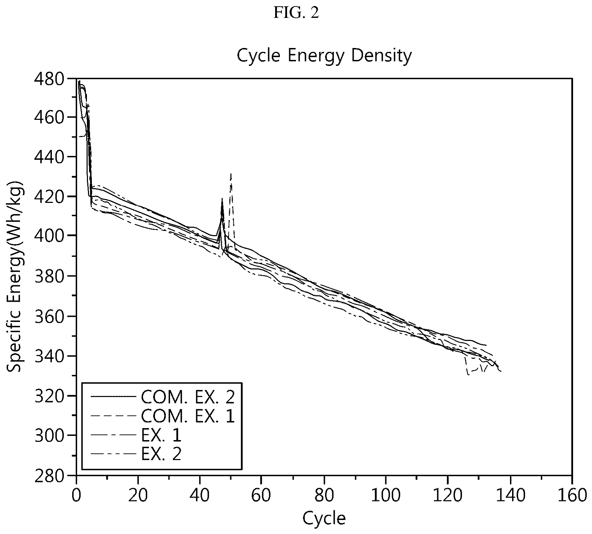

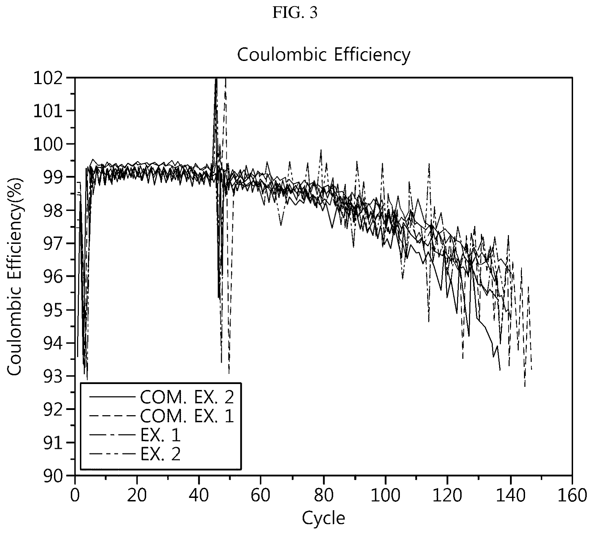

FIG. 1 shows the comparison of capacity retention rate as a function of charge and discharge cycle for each battery, FIG. 2 shows the comparison of specific capacity as a function of charge and discharge cycle for each battery, and FIG. 3 shows the Coulombic efficiency characteristics as a function of charge and discharge cycle for each battery.

According to FIGS. 1 to 3, it was confirmed that in the activation process, the initial discharge through constant voltage (CV) discharging, followed by aging, had a benefit effect on life, energy density (specific capacity), and Coulombic efficiency compared to constant current (CC) discharging.

In contrast, it was confirmed that in the activation process, the initial CV discharge without aging resulted in earlier deterioration of life characteristics due to battery degradation.

Meanwhile, in the activation process according to Comparative Example 2, the initial discharge required 4800 min, while in the activation process according to Example 1, the initial discharge required 1900 min, and accordingly it was confirmed that according to the present disclosure, it was possible to significantly reduce the activation process time of the lithium-sulfur battery, thereby effectively reducing the process time while maintaining the superior performance of the lithium-sulfur battery.

### Evaluation eluted amount of lithium polysulfide

For the completed battery after the activation process, based on 100 parts by weight of the sulfur (S) content in the sulfur-carbon composite added when manufacturing the battery, in ten charge and discharge cycles between 1.7 V and 2.5 V, the amount of lithium polysulfide eluted into the electrolyte after the first discharge and after the tenth discharge was measured, and TABLE 1 summarizes the measurements below.

Two identical batteries were prepared for each of the Examples and Comparative Examples, and after discharge, the amount of lithium polysulfide eluted into the electrolyte was measured by the method disclosed in Korean Patent Publication No. 2023-0099320 (published on July 4, 2023).

**[TABLE 1]**

| Classification | | Amount of lithium polysulfide eluted into electrolyte after first discharge (A) | Amount of lithium polysulfide eluted into electrolyte after tenth discharge (B) | Calculated value of B/A ratio (B:A = X:100) |
|---|---|---|---|---|
| Example 1 | Sulfur (S) content in sulfur-carbon composite (on the basis of 100 parts by weight) | 3 | 11 | X=366 |
| Example 2 | | 7 | 13 | X=186 |
| Comparative Example 1 | | 7 | 11 | X=157 |
| Comparative Example 2 | | 4 | 11 | X=275 |

Through the series of experiments, it was confirmed that when the aging step essentially performed in the initial CV discharge of the lithium-sulfur battery was effective in suppressing the initial degradation of the battery.

## Claims

1. A method for manufacturing a lithium-sulfur battery, the method comprising:
(S10) a process of manufacturing a preliminary battery including an electrode assembly and an electrolyte; and
(S20) an activation process of activating the preliminary battery,
wherein the electrode assembly includes a positive electrode, a negative electrode, and a separator interposed between the positive electrode and the negative electrode, wherein the positive electrode includes a positive electrode active material including sulfur (S),
wherein the process of the (S20) includes the steps of:
(S21) constant voltage (CV) discharging, and
(S22) aging in a discharged state.

2. The method for manufacturing the lithium-sulfur battery according to claim 1,
wherein the step (S21) is performed before initial charge of the preliminary battery.

3. The method for manufacturing the lithium-sulfur battery according to claim 1,
wherein the constant voltage discharging of the (S21) is performed at a voltage selected from 1.0 V to 2.0 V.

4. The method for manufacturing the lithium-sulfur battery according to claim 3,
wherein the constant voltage discharging of the (S21) is performed at a voltage selected from 1.7 V to 1.9 V.

5. The method for manufacturing the lithium-sulfur battery according to claim 1,
wherein the constant voltage discharging of the (S21) is terminated at 0.001C to 0.1C on C-rate basis.

6. The method for manufacturing the lithium-sulfur battery according to claim 5,
wherein the constant voltage discharging of the (S21) is terminated at 0.010C to 0.10C on the C-rate basis.

7. The method for manufacturing the lithium-sulfur battery according to claim 1,
wherein the constant voltage discharging of the (S21) is performed in a range between 0.1C and 0.5C on C-rate basis.

8. The method for manufacturing the lithium-sulfur battery according to claim 1,
wherein the aging step (S22) is performed under an atmosphere of 20°C to 30°C.

9. The method for manufacturing the lithium-sulfur battery according to claim 1, after the aging step (S22), further comprising the step of:
(S23) constant current (CC) charging.

10. The method for manufacturing the lithium-sulfur battery according to claim 1,
wherein the activation process of the (S20) is performed in an environment in which the preliminary battery is under pressure.

11. The method for manufacturing the lithium-sulfur battery according to claim 10,
wherein the pressure is equal to or higher than atmospheric pressure.

12. A lithium-sulfur battery comprising:
a positive electrode, a negative electrode, a separator interposed between the positive electrode and the negative electrode, and an electrolyte,
wherein the positive electrode includes a positive electrode active material containing elemental sulfur (S),
wherein the lithium-sulfur battery is manufactured through an activation process, and
wherein in ten repeated charge and discharge cycles between 1.7 V and 2.5 V, an amount of lithium polysulfide eluted into the electrolyte after the tenth discharge ranges between 170 parts by weight and 500 parts by weight based on 100 parts by weight of lithium polysulfide eluted into the electrolyte after the first discharge.

13. The lithium-sulfur battery according to claim 12,
wherein the amount of lithium polysulfide eluted into the electrolyte after the tenth discharge ranges between 180 parts by weight and 400 parts by weight, based on 100 parts by weight of lithium polysulfide eluted into the electrolyte after the first discharge.

14. The lithium-sulfur battery according to claim 12,
wherein the amount of lithium polysulfide eluted into the electrolyte after the tenth discharge is 20 parts by weight or less based on 100 parts by weight of elemental sulfur (S) in the positive electrode active material before the first discharge.

15. The lithium-sulfur battery according to claim 12,
wherein the amount of lithium polysulfide eluted into the electrolyte after the first discharge is 10 parts by weight or less based on 100 parts by weight of elemental sulfur (S) in the positive electrode active material before the first discharge.

16. The lithium-sulfur battery according to claim 12,
wherein the lithium-sulfur battery is manufactured by the method according to any one of claims 1 to 11.
